# EUROPEAN PATENT SPECIFICATION

(11) **EP 1 826 443 B1**
(45) Date of publication and mention of the grant of the patent: **11.03.2009**
(21) Application number: 06025982.7
(22) Date of filing: 14.12.2006
(51) Int. Cl.: F16D 48/06

(54) **Clutch failure detector**
Kupplungsfehlerdetektor
Dispositif de détermination de panne d'un embrayage

(30) Priority: 24.02.2006 JP 2006048086
(43) Date of publication of application: 29.08.2007
(73) Proprietor: Yamaha Hatsudoki Kabushiki Kaisha, Iwata-shi, Shizuoka-ken 438-8501 (JP)
(72) Inventor: Takeuchi, Yoshihiko, c/o Yamaha Hatsudoki K.K., Iwata-shi, Shizuoka-ken 438-8501 (JP)
(74) Representative: Grünecker, Kinkeldey, Stockmair & Schwanhäusser Anwaltssozietät

(56) References cited:
- WO-A-02/25131
- WO-A-98/24008
- WO-A-20/04005743
- DE-A1- 19 709 419
- DE-A1- 19 853 333

## Description

The present invention relates to a method to detect failure of an automatic clutch system according to the preamble part of claim 1 and to a clutch failure detector according to the preamble part of claim 3. Additionally, the present invention also relates to an automatic clutch system having the clutch failure detector to detect a failure of the automatic clutch system, and a straddle-type vehicle having the automatic clutch system.

A two-wheeled motor vehicle, which has a friction clutch and a hydraulic automatic clutch system for automatically disengaging and engaging the friction clutch, is conventionally known. For example, in JP-A-2003-329064 such a two-wheeled motor vehicle has an electric actuator and a hydraulic cylinder that function as the automatic clutch system, in which the electric actuator is used to drive the hydraulic cylinder to disengage and engage the friction clutch.

There have been needs for a system for detecting a failure of the automatic clutch system for the purpose of improving reliability of the automatic clutch system. In order to meet such needs, a failure detector is proposed, which has a hydraulic sensor for detecting a pressure of hydraulic oil to detect a failure of the automatic clutch system.

However, the system for detecting a failure of the automatic clutch system using the hydraulic sensor results in a more complicated assembly process due to an additional step of installing, the hydraulic sensor. This system also requires a space for installing the sensor. Especially, a straddle-type vehicle, such as two-wheeled motor vehicle, occasionally has severe limitations of the space for installing the sensor or even has a difficulty in securing such an installation space. In addition, since the sensor is physically installed, there arises another problem with durability of the installation area for the sensor. The present invention has been derived from the foregoing problems.

WO 2004/005743 A1 discloses a method to detect failure of an automatic clutch system according to the preamble part of claim 1 and a clutch failure detector according to the preamble part of claim 3. It is disclosed that a current supplied to a clutch actuator is measured by means of a current unit. When said current value is above a predetermined current value within a time period which is longer than a predetermined time period, a lock failure of the clutch is assumed.

It is an objective of the present invention to provide a method to detect failure of an automatic clutch system and a clutch failure detector which are capable of performing clutch failure detection accurately and efficiently.

According to the present invention, said objective Is solved by a method to detect failure of an automatic clutch system having the combination of features of independent claim 1.

Accordingly, a value of a current supplied to a clutch actuator during an operation of engagement and disengagement is determined, and a judgment of presence of a failure is made based on the such determined current value. With this, it is possible to save the space for the clutch failure detector and to improve durability of the clutch failure detector.

Preferably, the operation of engagement and disengagement of the clutch is executed separately after detecting a start command for an engine of the vehicle and prior starting the engine.

Moreover, according to the present invention, the aforesaid objective is solved by a clutch failure detector having the combination of features of independent claim 3.

Preferably, the determination device compares the totalized value for a specific period of time while the clutch is in the process of engaging, with a preset threshold.

This objective is further solved by an automatic clutch system comprising: a clutch; an electric actuator for directly or indirectly disengaging and engaging the friction clutch; a drive control unit for drive control of the actuator; and a clutch failure detector according to one of the above embodiments.

Preferably, the clutch is a friction clutch, in particular a wet multiple plate clutch.

Further, preferably the actuator is a motor.

This objective is still further solved by a straddle-type vehicle comprising the automatic clutch system according to one of the above embodiments.

According to another preferred embodiment, the straddle-type vehicle further comprises: a power source system for supplying power; a main switch for turning ON/OFF power supply from the power source system; and an engine.

Preferably, the drive control unit drives the actuator in response to turning ON the main switch, and the clutch failure detector performs failure determination based on the current value for the actuator.

Further, preferably the drive control unit drives the actuator in response to turning ON the main switch to perform the operation to disengage and engage the clutch, and the clutch failure detector performs failure determination for the automatic clutch system while the clutch is in the process of engaging in the operation to disengage and engage the friction clutch.

Yet further, preferably upon turning ON the main switch, the drive control unit drives the actuator prior to a start-up of the engine, and the clutch failure detector performs failure determination based on the current value for the actuator, which is obtained prior to the start-up of the engine.

According to yet another preferred embodiment, the straddle-type vehicle further comprises a gearbox, wherein when the gearbox is in neutral, the drive control unit drives the actuator upon turning ON the main switch to perform the operation to disengage and engage the friction clutch, and the clutch failure detector performs failure detection for the automatic clutch system while the friction clutch is in the process of engaging in the operation to disengage and engage the friction clutch.

According to still another preferred embodiment, the straddle-type vehicle further comprises a brake, wherein in case that the main switch is turned. ON with the gearbox in a gear-in state, the drive control unit drives the actuator upon a brake-on operation to perform the operation to disengage and engage the friction clutch, and the clutch failure detector performs failure detection for the automatic clutch system while the friction clutch is in the process of engaging in the operation to disengage and engage the friction clutch.

According to yet another preferred embodiment, the straddle-type vehicle further comprises an alarm for informing that the clutch failure detector has detected a failure of the automatic clutch system.

According to another preferred embodiment, the straddle-type vehicle further comprises a gearbox, wherein the friction clutch has a first and a second friction member which contact with and separate from each other, and the drive control unit allows both the friction members to be spaced apart by a specific distance in the case of gear changes of the gearbox, while allowing both the friction members to be spaced apart by a distance shorter than the specific distance in the case of the failure determination.

Accordingly, the straddle-type vehicle further comprises a holding device for holding the engine stop state while the operation to disengage and engage the friction clutch is performed by the drive control unit.

Accordingly, the straddle-type vehicle further comprises an engine starter that starts-up the engine automatically after the operation to disengage and engage the friction clutch is ended, in case that an operation related to a start-up of the engine is implemented while the operation to disengage and engage the friction clutch is performed by the drive control unit.

In the following, the present invention is explained in greater detail with respect to several embodiments thereof in conjunction with the accompanying drawings, wherein:
- FIG. 1: is a side view of a two-wheeled motor vehicle according to one embodiment,
- FIG. 2: is a configuration diagram of a driving system of the two-wheeled motor vehicle shown in FIG. 1,
- FIG. 3: is a block diagram illustrating the entire configuration of a control system mounted on the two-wheeled motor vehicle,
- FIG. 4: is a block diagram illustrating a driving system device group,
- FIG. 5: is a block diagram illustrating a sensor/switch group,
- FIG. 6: is a flowchart illustrating a flow of a process to be executed by an ECU when the two-wheeled motor vehicle is stopped,
- FIG. 7: is a flowchart illustrating a flow of a process to detect a clutch failure, which is called up in a step S130 shown in FIG. 6 and executed as a sub routine,
- FIG. 8: illustrates characteristics of values of current supplied to a clutch actuator during an operation to disengage and engage a clutch, and
- FIG. 9: is a side view showing how the clutch actuator and a shift actuator are mounted to an engine,

### Description of Reference Numerals:

- 10:: two-wheeled motor vehicle (straddle-type vehicle)
- 11:: body frame
- 16:: seat
- 28:: engine unit
- 43:: shift switch
- 43a:: shift up switch
- 43b:: shift down switch
- 45:: indicator (alarm)
- 54:: clutch (friction clutch)
- 54a:: clutch housing
- 54b:: clutch boss
- 54c:: friction plate (friction member)
- 54d:: clutch plate (friction member)
- 63:: clutch actuator (actuator)
- 64:: hydraulic pressure transmitting mechanism
- 65:: shift actuator
- 68:: clutch position sensor
- 70:: gear position sensor
- 71:: rod
- 72:: lever
- 73:: pinion
- 74:: rack
- 77:: automatic clutch system
- 90:: main microcomputer
- 91:: current value detecting circuit
- 92:: totalized value calculating circuit
- 96:: main switch
- 97:: battery
- 98:: power supply circuit
- 100:: ECU(clutch failure detector, drive control unit)

Description is hereinafter made of embodiments in detail with reference to the drawings.

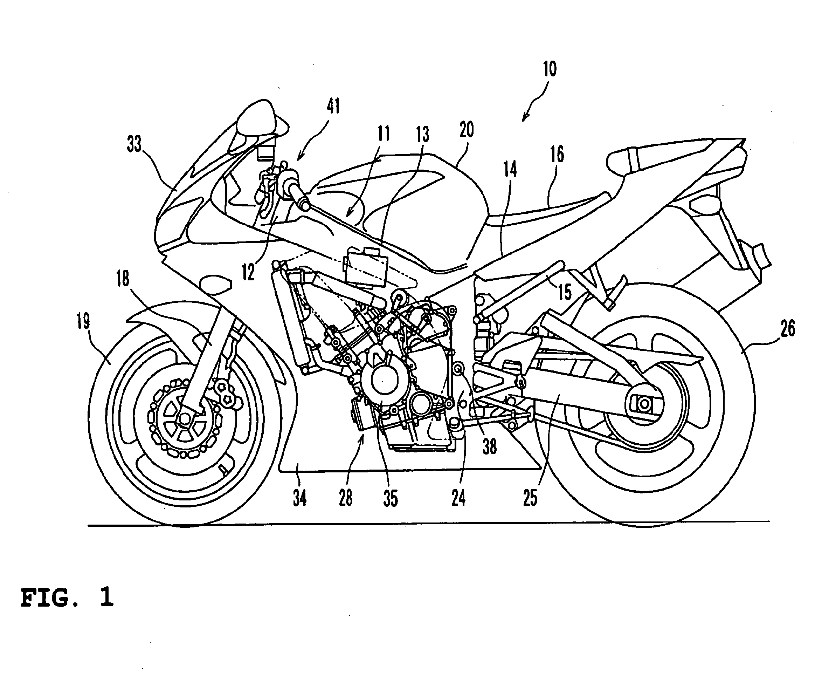

As shown in FIG. 1, the straddle-type vehicle according to this embodiment is a two-wheeled motor vehicle 10. The two-wheeled motor vehicle 10 has a body frame 11 which forms the skeleton thereof and a seat 16 on which a rider can be seated. The rider seated on the seat 16 straddles the body frame 11 to be on the vehicle. In the embodiment, the shape of the vehicle is not limited to the one shown in FIG. 1, and the maximum speed, displacement and size of the vehicle are not limited. The straddle-type vehicle may be so-called a motorcycle type two-wheeled motor vehicle having a fuel tank in front of a seat. Also, the straddle-type vehicle is not limited to a two-wheeled motor vehicle, but may be a different straddle-type vehicle, such as a four-wheeled buggy.

In the following description, front, rear, right and left refer to the directions as viewed from a rider seated on the seat 16. The body frame 11 has a steering head pipe 12, a main frame 13 extending rearward and obliquely downward from the steering head pipe 12, right and left seat rails 14 extending rearward and obliquely upward from an intermediate portion of the main frame 13, and right and left seat pillar tubes 15 each connected to the rear end of the main frame 13 and an intermediate portion of the corresponding seat rail 14.

A front wheel 19 is supported by the steering head pipe 12 via a front fork 18. A fuel tank 20 and the seat 16 are supported on the seat rails 14. The seat 16 extends from a position on the fuel tank 20 toward the rear ends of the seat rails 14. The fuel tank 20 is placed on the front halves of the seat rails 14.

A pair of right and left rear arm brackets 24 are provided at the rear end of the main frame 13. Here, the rear arm brackets 24 and so on provided on the main frame 13 form a part of the body frame 11.

The rear arm brackets 24 protrude downward from the rear end of the main frame 13. The rear arm brackets 24 have a pivot shaft 38, and the front end of a rear arm 25 is swingably supported by the pivot shaft 38. A rear wheel 26 is supported at the rear end of the rear arm 25.

An engine unit 28 for driving the rear wheel 26 is also supported by the body frame 11. A crankcase 35 is suspended from and supported by the main frame 13. In this embodiment, the engine unit 28 has a gasoline engine (not shown). The engine of the engine unit 28 is not limited to an internal combustion engine, such as a gasoline engine, and may be a motor engine or the like.

The two-wheeled motor vehicle 10 has a front cowling 33 and right and left leg shields 34. The leg shields 34 are cover members for covering front parts of the rider's legs.

A brake pedal is provided at a lower right part of the two-wheeled motor vehicle 10 although not shown in FIG. 1. The brake pedal is used to stop the rear wheel 26. The front wheel 19 is stopped by operating a brake lever (not shown) provided in the vicinity of a right grip 41 R (not shown) of handlebars 41.

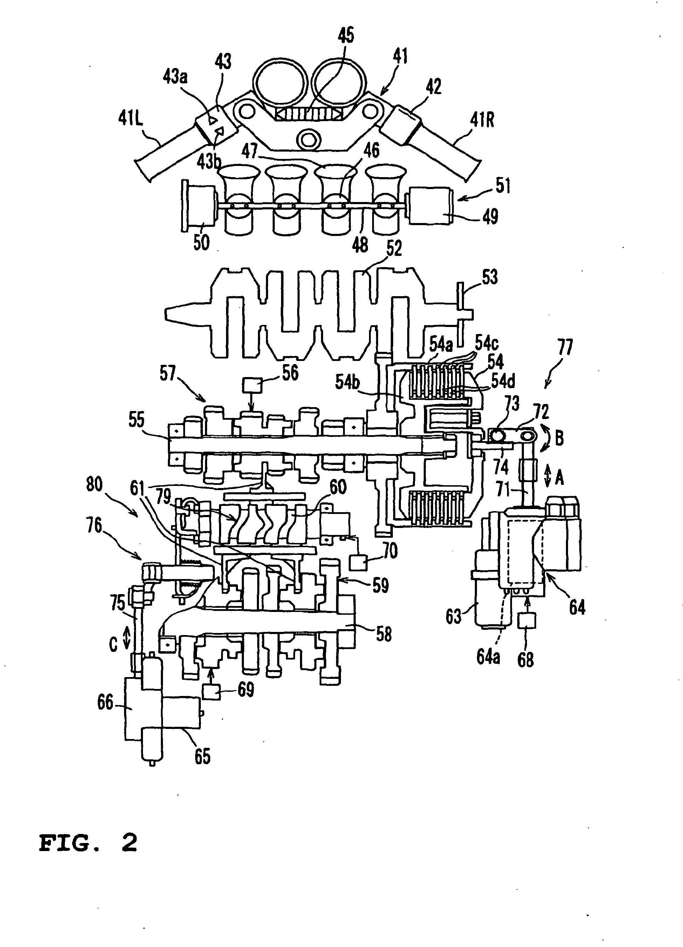

FIG. 2 is a configuration diagram of a driving system of the two-wheeled motor vehicle shown in FIG. 1. The right grip 41R of the handlebars 41 (see also FIG. 1) constitutes an accelerator grip, and a throttle input sensor 42 is attached to the accelerator grip. The throttle input sensor 42 detects an accelerator input (throttle opening input) by the rider. A shift switch 43 is provided on the side of the left grip 41 L on the handlebars 41. The shift switch 43 has a shift up switch 43a and a shift down switch 43b, and can change the shift position between neutral and top speed position (sixth gear speed in this embodiment) by manual operation to increase or decrease the speed. Also, at the center of the handlebars 41, an indicator 45 for indicating the current shift position and so on is provided.

Throttle valves 46 are attached to throttles 47 forming an air intake passage. A throttle driving actuator 49 is provided at the right end of a valve shaft 48 for the throttle valves 46, and a throttle opening sensor 50 is provided at the left end of the valve shaft 48. The throttle driving actuator 49 and the throttle opening sensor 50 attached to the valve shaft 48 constitute a DBW (drive-by-wire) 51. The DBW 51 opens or closes the throttles 47 with the throttle driving actuator 49 depending on the results of detection by the throttle opening sensor 50.

An engine rotational speed sensor 53 is provide at the right end of a crankshaft 52 connected to the engine (not shown). The crankshaft 52 is connected to a main shaft 55 via a wet multiple plate clutch 54. The clutch 54 has a clutch housing 54a and a clutch boss 54b. A plurality of friction plates 54c are attached to the clutch housing 54a, and a plurality of clutch plates 54d are attached to the clutch boss 54b. Each of the clutch plates 54d is placed between adjacent friction plates 54c and 54c. A plurality of (six in FIG. 2) shift gears 57 are mounted on the main shaft 55, and a main shaft rotational speed sensor 56 is attached to the main shaft 55. The shift gears 57 mounted on the main shaft 55 are in meshing engagement with shift gears 59 mounted on a drive shaft 58 disposed parallel to the main shaft 55. In FIG. 2, the shift gears 57 and the shift gears 59 are separated for convenience of explanation.

Both or either the shift gears 57 and/or the shift gears 59 are mounted on the main shaft 55 or the drive shaft 58 in such a manner as to idle relative thereto except for selected gears. Therefore, transmission of driving force from the main shaft 55 to the drive shaft 58 is made only through a pair of selected shift gears.

The operation to select a shift gear 57 and a shift gear 59 for a gear change is carried out by a shift cam 79. The shift cam 79 has a plurality of (three in FIG. 2) cam grooves 60, and a shift fork 61 is received in each cam groove 60. Each shift fork 61 is engaged with specific shift gears 57 and 59 on the main shaft 55 and the drive shaft 58. When the shift cam 79 rotates, the shift forks 61 move axially along the cam grooves 60, and a pair of the specific shift gears 57 and 59 positioned in response to a rotation angle of the shift cam 79 are in spline engagement with the main shaft 55 and the drive shaft 58. A pair of shift gears 57 and 59 in spline engagement allow driving force to be transmitted from the main shaft 55 to the drive shaft 58. The shift gears 57 and 59, and the shift cam 79 constitute a gearbox 80.

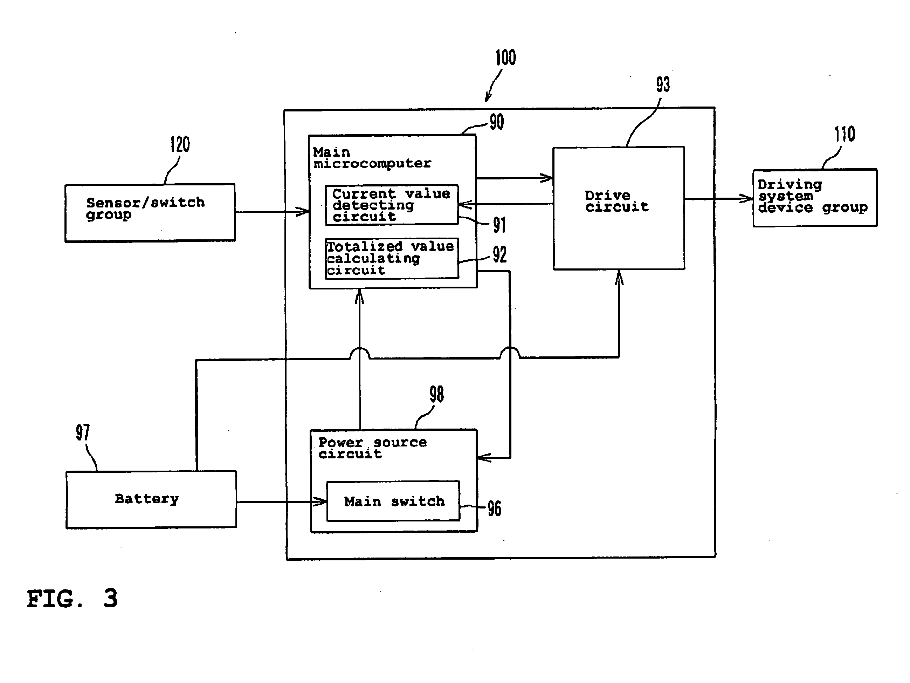

The clutch 54 and the gearbox 80 are driven by a clutch actuator 63 and a shift actuator 65, respectively. The clutch actuator 63 is connected to the clutch 54 via a hydraulic pressure transmitting mechanism 64, a rod 71, a lever 72, a pinion 73 and a rack 74. The hydraulic pressure transmitting mechanism 64 is a mechanism which has a hydraulic cylinder 64a, an oil tank (not shown), and so on, and which is driven by the clutch actuator 63 to generate hydraulic pressure and transmits the hydraulic pressure to the rod 71. When the rod 71 is driven by the clutch actuator 63 to reciprocate as indicated by the arrow A, the lever 72 rotates as indicated by the arrow B, whereby the clutch 54 is engaged or disengaged depending on the moving direction of the rack 74. Although an electric motor is employed as the clutch actuator 63 in this embodiment, the present teaching is not limited thereto. For example, a solenoid or the like may be used. Also, an automatic clutch system 77 in the present embodiment is constituted with the clutch 54, the clutch actuator 63, the hydraulic pressure transmitting mechanism 64, the rod 71, the lever 72, the pinion 73, the rack 74, and the ECU 100 (see FIG. 3) for drive control of the clutch actuator 63. In the present embodiment, the automatic clutch is not necessarily driven by the hydraulic pressure transmitting mechanism, but may be driven by a transmission mechanism, such as wire or rod, for example.

The shift actuator 65 is connected to the shift cam 79 via the reduction mechanism 66, the rod 75 and the link mechanism 76. The reduction mechanism 66 has a plurality of reduction gears (not shown). At the time of a gear change, the rod 75 is driven by the shift actuator 65 to reciprocate as indicated by the arrow C, and the shift cam 79 is rotated by a specific angle via the link mechanism 76. The shift forks 61 thereby move axially a specific distance along the cam grooves 60, and a pair of shift gears 57 and 59 are fixed to the main shaft 55 and the drive shaft 58, respectively. Then, driving force is transmitted from the main shaft 55 to the drive shaft 58. Although an electric motor is employed as the shift actuator 65 in this embodiment, the technical teaching is not limited thereto. For example, a solenoid or the like may be used.

The hydraulic pressure transmitting mechanism 64 connected to the clutch actuator 63 has a clutch position sensor 68 which detects the stroke position of the piston to detect the clutch position. Also, a vehicle speed sensor 69 is provided on the drive shaft 58. In addition, a gear position sensor 70 for detecting the gear position (the amount of rotation of the shift cam) is provided on the shift cam 79.

A shift change is carried out when an ECU 100 (engine control unit), which is described later, performs drive control of the clutch actuator 63 and the shift actuator 65 in response to an operation of the shift up switch 43a or the shift down switch 43b. More specifically, a series of operations: disengagement of the clutch 54 by the clutch actuator 63 → gear change of the shift gears 57 and 59 by the shift actuator 65 → engagement of the clutch 54 by the clutch actuator 63, is performed based on a specific program or map.

As shown in FIG. 9, the clutch actuator 63 and the shift actuator 65 are mounted to the crankcase 35 (see also FIG. 1). The clutch actuator 63 is located behind the cylinder 83, and between the crankcase 35 and a carburetor 84 disposed above the crankcase 35. The shift actuator 65 is disposed on the side of the upper portion of the crankcase 35 in a longitudinal direction of the vehicle, and located between the crankshaft 52 and the pivot shaft 38 (see also FIG. 1).

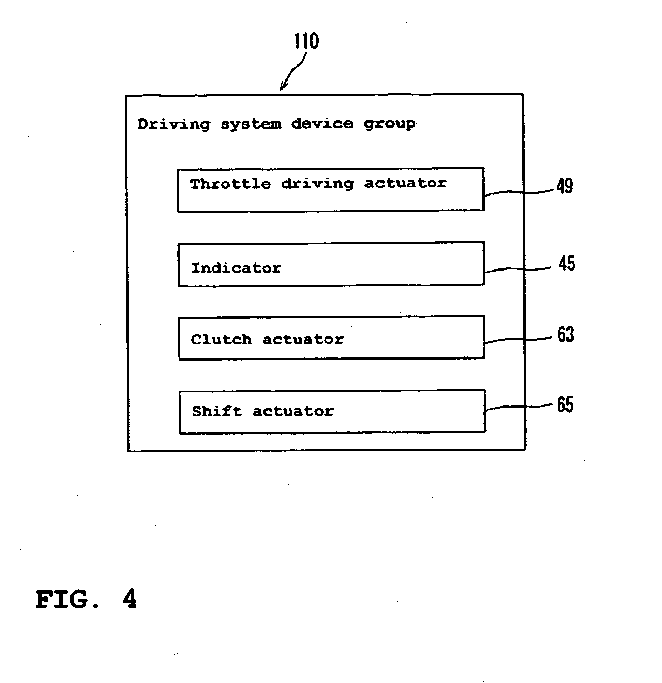

FIG. 3 is a block diagram illustrating the entire configuration of a control system mounted on the two-wheeled motor vehicle 10. A driving system device group 110 is connected to a main microcomputer 90 of ECU 100 via a drive circuit 93. The ECU 100 corresponds to the clutch failure detector in the present embodiment. The driving system device group 110 consists of the throttle driving actuator 49, the indicator 45, the clutch actuator 63 and the shift actuator 65 (see also FIG. 2) as shown in FIG. 4.

The drive circuit 93 supplies appropriate current to the devices forming the driving system device group 110 from a battery 97 in response to a drive signal fed from the main microcomputer 90. In this embodiment, values of current supplied from the drive circuit 93 to drive the clutch actuator 63 are fed-back to a current value detecting circuit 91 included in the main microcomputer 90. The main microcomputer 90 also includes a totalized value calculating circuit 92. The totalized value calculating circuit 92 calculates, based on the current values detected by the current value detecting circuit 91, a totalized current value for a specific period of time while the clutch 54 (see FIG. 2) is in the process of engaging by the clutch actuator 63. The main microcomputer 90, including the current value detecting circuit 91 and the totalized value calculating circuit 92, serves as both a current value detector and a totalized value detector in the present embodiment.

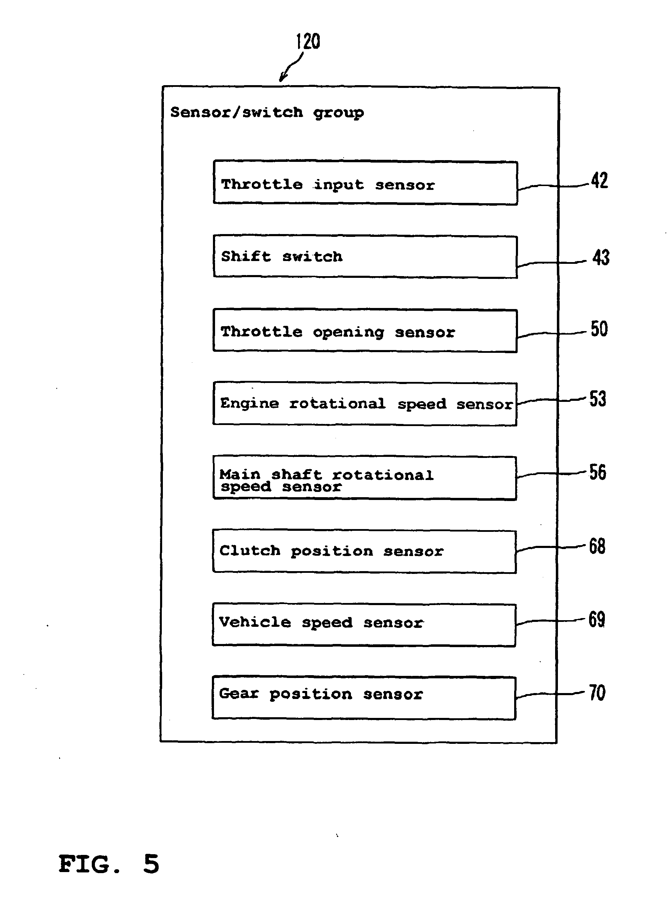

A sensor/switch group 120 is also connected to the main microcomputer 90. The sensor/switch group consists of the throttle input sensor 42, the shift switch 43, the throttle opening sensor 50, the engine rotational speed sensor 53, the main shaft rotational speed sensor 56, the clutch position sensor 68, the vehicle speed sensor 69 and the gear position sensor 70 as shown in FIG. 5 (see also FIG. 2), and the results of detections by the sensors are inputted into the main microcomputer 90. The main microcomputer 90 feeds drive signals to the devices forming the driving system device group 110 based on the results of detections received from the sensors to perform drive control of them.

A power source circuit 98 connected to the battery 97 has a main switch 96 which is switched on or off in synchronization with a key switch (not shown). When the main switch 96 is switched on, the power source circuit 98 converts the voltage from the battery 97 into a voltage for driving the main microcomputer 90 and supplies it to the main microcomputer 90.

A process to be executed by the ECU 100 to detect a failure of the automatic clutch system 77 is described below. When the two-wheeled motor vehicle 10 according to this embodiment is stopped, upon turning ON the main switch 96, an operation to disengage and engage the clutch 54 is executed experimentally for the purpose of failure detection for the automatic clutch system 77. Whether or not the automatic clutch system 77 has a failure is determined based on the values of current supplied to the clutch actuator 63 during an operation to disengage and engage the clutch 54.

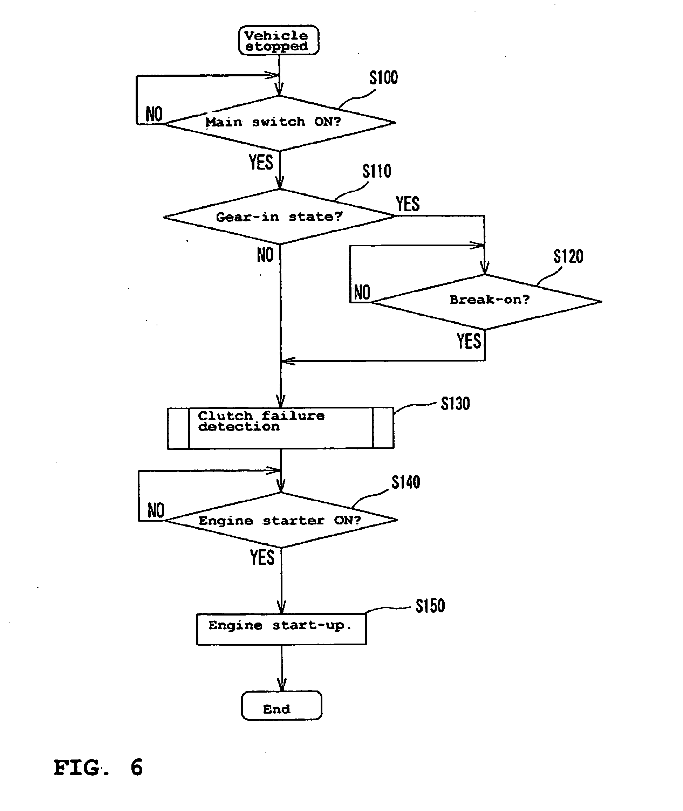

FIG. 6 is a flowchart illustrating a flow of a process to be executed by the ECU 100 when the two-wheeled motor vehicle 10 is stopped. First, the ECU 100 determines whether or not the main switch 96 has been ON in a step S100. More specifically, upon an operation of a key switch (not shown) by a rider, the ECU 100 determines whether or not the main switch 96 has been ON. If it is determined that the main switch 96 has not been ON, the ECU 100 returns the process to the step S100 and waits until the main switch 96 is turned ON.

In turn, if it is determined that the main switch 96 has been ON in the step S100, then the ECU 100 determines whether or not the gearbox is in a gear-in state in a step S110. In this process, the ECU 100 determines whether or not the gear position is in any one of the first to sixth speeds based on a detection signal from the gear position sensor 70. If it is determined that the gearbox is not in a gear-in state, that is, the gearbox is in neutral, the ECU goes to the process in a step S130 which is discussed later. In turn, if it is determined that the gearbox is in a gear-in state, whether or not a brake-on operation has been executed is next determined in a step S120. In this process, the ECU 100 determines whether or not an operation of the brake or the brake pedal has been executed.

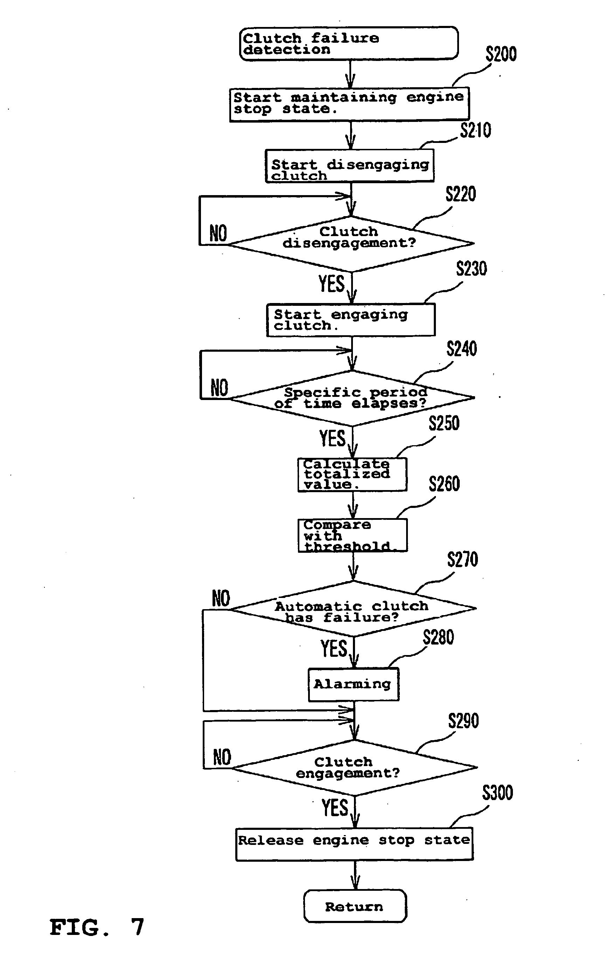

If it is determined that the brake-on operation has not been executed, the ECU 100 returns the process to the step S120 and waits until the brake-on operation is executed. In turn, if it is determined that the brake-on operation has been executed, a process to detect a clutch failure is next performed in the step S130. In this process, regardless of a manual shift change by the rider, the operation to disengage and engage the clutch 54 is performed, and based on the values of current supplied to the clutch actuator 63 while the clutch 54 is in the process of engaging in the operation to disengage and engage the clutch 54, whether or not the automatic clutch system 77 has a failure is determined. Details of the process will be described later with reference to a figure (FIG. 7).

When the process in the step S130 is executed, the ECU 100 next determines whether or not an engine starter has been ON in a step S140. In this process, the ECU 100 determines whether or not the engine starter (not shown) has been depressed. The process in the step S140 to determine whether or not the engine has been ON is executed after the completion of the process to detect a clutch failure in the step S130, as well as during the execution of this process. If it is determined that the engine starter has not been ON, the ECU 100 returns the process to the step S140 and waits until the engine starter is turned ON. In turn, if it is determined that the engine starter has been ON, the engine is started-up in the process in a step S150 to end the sub routine. In this embodiment, if the engine starter is depressed during the execution of the process to detect a clutch failure in the step S130, the ECU 100 waits until the process to detect a clutch failure is ended, and then allows the engine to start-up.

FIG. 7 is a flowchart illustrating a flow of a process to detect a clutch failure, which is called up in the step S130 in FIG. 6 and executed as a sub routine. The ECU 100 starts the process to detect a clutch failure with a first step related to keeping the engine stopped. This step is designed to hold the engine stationary even when the engine starter is ON.

Next, in a step S210, disengagement of the clutch is started. In this process, the ECU 100 starts a process to disengage the clutch 54 at a constant speed by driving the clutch actuator 63. When the process in the step S210 is executed, it is next determined whether or not disengagement of the clutch has been completed in a step S220. In this process, the ECU 100 determines whether or not the clutch 54 has been completely disengaged based on based on the results of detections received from the clutch position sensor 68 (see FIGs. 1 and 5). If it is determined that disengagement of the clutch has not been completed, the ECU 100 returns the process to the step S220 and waits until the clutch 54 is completely disengaged.

If it is determined that disengagement of the clutch has been completed in the step S220, engagement of the clutch is started in a step S230. In this process, the ECU 100 starts a process to engage the clutch 54 at a constant speed by driving the clutch actuator 62. An engaging speed for the clutch 54 is preset slower than a disengaging speed for the clutch 54 in the step S210.

When the process in the step S230 is executed, it is next determined whether or not a specific period of time has elapsed in a step S240. In this process, the ECU 100 determines whether or not a preset specific period of time has elapsed since the process in the step S230 is started. If it is determined that the specific period of time has not elapsed, the ECU 100 returns the process to the step S240 and stands ready.

In turn, if it is determined that the specific period of time has elapsed, a process to calculate a totalized current value is next performed in a step S250. In this process, the ECU 100 executes the process to calculate a totalized value of current supplied to the clutch actuator 63 until the specific period of time elapses while the clutch 54 is in the process of engaging. The value of current supplied to the clutch actuator 63 is detected by the current value detecting circuit 91 included in the main microcomputer 90 at every given timing, and is stored to a memory (not shown) or the like. Based on the detection results, the totalized current calculating circuit 92 calculates the totalized current value for the specific period of time since the process in the step S230 is executed.

When the process in the step S250 is executed, a process to compare the totalized value provided by the process in the step S250 with a threshold stored in advance in the memory or the like of the ECU 100 is next performed in a step S260. The threshold may be calculated in advance by examining values of current supplied to the clutch actuator 63, using the automatic clutch system 77 that works properly.

When the process in the step S260 is executed, it is determined whether or not the automatic clutch system 77 has a failure in a step S270. This determination is made based on the comparison result provided by the process in the step S260. More specifically, if a difference between the totalized current value provided by the process in the step S250 and the threshold is equal to or greater than a specific value, it is determined that the automatic clutch system 77 has a failure (e.g. hydraulic oil leakage). When it is determined that the automatic clutch system 77 has a failure, the driver is informed as such with any alarm (e.g. the indicator shown in FIG. 1) in a step S280. The alarm is not limited to the indicator, but may be any device that can inform the driver of the failure. To be more specific, a sound generator for generating sounds, as well as an igniter and a fuel injector, which let the driver know the failure with changes in engine power output, may be used.

After the process in the step S280 is executed or it is determined that the automatic clutch system 77 has no failure in the step S270, whether or not the engagement of the clutch 54 has been completed is next determined in a step S290. In this process, the ECU 100 determines whether or not the clutch 54 has been completely engaged based on the results of detections received from the clutch position sensor 68. If it is determined that engagement of the clutch 54 has not been completed, the ECU 100 returns the process to the step S290 and waits until the clutch 54 is completely engaged. When it is determined that the clutch 54 has been completely engaged, the engine stop state established in the process in the step S200 is released in a step S300. Upon performing the process in the step S300, the engine starter is turned ON and therefore the engine starts-up. When the process in the step S300 is executed, the process to detect a clutch failure is ended.

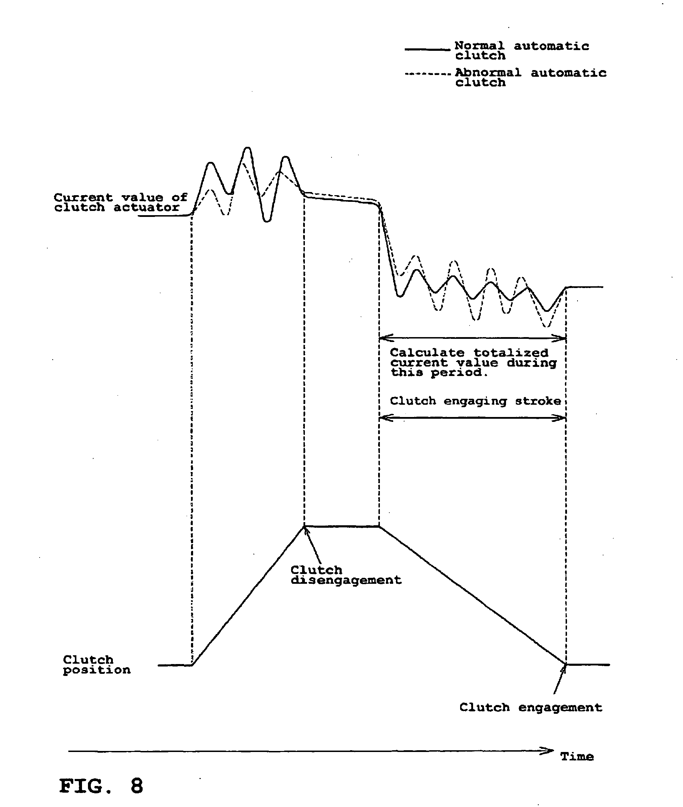

FIG. 8 illustrates characteristics of values of current supplied to the clutch actuator 63 during an operation to disengage and engage the clutch 54. FIG. 8 shows a clutch position during the operation to disengage and engage the clutch 54. As shown in the figure, the engaging speed for the clutch 54 is slower than the disengaging speed for the clutch 54 during the normal operation to disengage and engage the clutch 54. FIG. 8 also shows two patterns of values of current supplied to the clutch actuator 63 during the operation to disengage and engage the clutch 54. The solid line indicates that the automatic clutch system 77 functions properly whereas the broken line indicates that any of components in the automatic clutch system 77 has a failure.

In this embodiment, a totalized value of current supplied to the clutch actuator 63 is calculated over a whole period of the engagement stroke of the clutch 54. Using only a current value at any single point for comparison purpose is not accurate enough to determine whether or not the automatic clutch system 77 has a failure, in view of the characteristics of the two patterns of current values for the clutch actuator 63 shown in FIG. 8. Therefore, a totalized current value for a specific period of time is used for comparison in this embodiment, which clearly shows differences in totalized value between normal and abnormal conditions of the automatic clutch system 77.

As described above, in the two-wheeled motor vehicle 10 according to this embodiment, a failure of the automatic clutch system 77 is detected based on the values of current supplied to the clutch actuator 63 during the operation to disengage and engage the clutch 54. Thus, no separate sensor (e.g. torque sensor or hydraulic sensor) for detecting a failure of the automatic clutch system 77 need be installed thereto. This results in no additional step of installing the sensor, which can prevents the manufacturing process from being complicated. In addition, no space is needed for installing the sensor. Further, as no sensor is needed, no problem arises with respect to durability of the installation area.

In the two-wheeled motor vehicle 10 according to this embodiment, a totalized current value over a specific period of time is calculated to compare this totalized value with the preset threshold in order to determine whether or not the automatic clutch system 77 has a failure. At this time, the values of current supplied to the clutch actuator 63 in operation are fed-back to the main microcomputer 90 to totalize the current values. Thus, whether or not the automatic clutch system 77 has a failure can be more accurately determined. In other words, it may be difficult to determine the presence or absence of a failure by only comparing a current value at a single point with the threshold. However, using a totalized value for such comparison gives clear differences in current value between the normal and abnormal conditions. Therefore, the accuracy for determining if the automatic clutch system 77 has a failure can be enhanced.

As previously noted, in this embodiment, based on the totalized current value for a specific period of time, a specific quantity of energy needed for disengaging and engaging the clutch 54 is detected. The detected energy quantity is compared with a prescribed energy quantity, and based on a difference between these quantities, whether the automatic clutch system 77 has a failure is detected. Since the failure detection for the automatic clutch system 77 is based on a readily detectable physical quantity or the energy quantity, the accuracy for detecting a failure of the automatic clutch system 77 can be improved.

Also, in this embodiment, failure detection is performed based on a totalized current value, which is specifically provided while the clutch 54 is in the process of engaging in the operation to disengage and engage the clutch 54. As described above, generally the engaging speed for the clutch 54 is slower than the disengaging speed. Thus, according to this embodiment, current values are detected more accurately and readily, which further enhances the accuracy for detecting a failure of the automatic clutch system 77.

In this embodiment, the automatic clutch system 77 includes: the electric clutch actuator 63; and the hydraulic pressure transmitting mechanism 64 having the hydraulic cylinder 64a. This allows the hydraulic pressure transmitting mechanism 64 to amplify driving force for the clutch actuator 63. Thus, the operation to disengage and engage the clutch 54, which requires relatively large driving force, can be performed smoothly. Therefore, detection of current values for the purpose of failure determination and smooth disengagement and engagement of the clutch 54 can be both achieved. In addition, a relatively small motor may be utilized as the clutch actuator 63. The mechanism for amplifying driving force for the clutch actuator 63 is not limited to the hydraulic pressure transmitting mechanism 64 having the hydraulic cylinder 64a, but an alternative mechanism may also be used. For example, a mechanism having a different type of fluid pressure cylinder, other than the hydraulic cylinder, may be used.

In this embodiment, the clutch 54 is a wet multiple plate clutch. This type of clutch has a limited space for installing a torque sensor or a hydraulic sensor, and tends to involve more complicated assembly of the sensor. In view of these circumstances, such a configuration that no sensor is required is significantly effective. However, the clutch is not limited to a wet multiple plate clutch, but may be a dry clutch or a single plate clutch.

According to this embodiment, the clutch actuator 63 is formed by the electric motor. This provides easy and accurate detection of values of current supplied to the clutch actuator 63.

In the two-wheeled motor vehicle 10 according to this embodiment, as shown in FIG. 6, when the gearbox is in neutral, the operation to disengage and engage the clutch 54 is performed upon turning on the main switch 96. During the operation to disengage and engage the clutch 54, failure detection for the automatic clutch system 77 is implemented. More specifically, when the vehicles is stopped, the operation to disengage and engage the clutch 54 is performed, regardless a manual operation by the rider, for a period between when the main switch 96 is turned ON and when the engine is started-up. During this period, failure detection for the automatic clutch system 77 is implemented. This allows the rider to make sure that the automatic clutch system 77 functions properly prior to a start of driving the two-wheeled motor vehicle 10. In addition, failure detection can be automatically performed every time the user rides the two-wheeled motor vehicle 10. This eliminates the possibility of failing to perform failure detection over a long time, unlike the case where the user manually gives an instruction to detect a failure.

In the two-wheeled motor vehicle 10 according to this embodiment, if the main switch 96 is turned ON with the gearbox in a gear-in state, then the operation to disengage and engage the clutch 54 is performed upon the brake-on operation. During this operation, failure detection for the automatic clutch system 77 is implemented. When the vehicle is stopped on the sloping road, that is, the vehicle is stopped with the gearbox in a gear-in state, and the operation to disengage and engage the clutch 54 is performed, the vehicle may move at the time of disengaging the clutch 54. Thus, as described in this embodiment, the ECU 100 waits until the brake-on operation is executed and then starts the operation to disengage and engage the clutch 54, which can prevents the vehicle from moving during the failure detection.

In addition, in the two-wheeled motor vehicle 10 according to this embodiment, when a failure of the automatic clutch system 77 is detected, the rider is informed as such. This allows the rider to immediately know the occurrence of a failure of the automatic clutch system 77.

In addition, in the two-wheeled motor vehicle 10 according to this embodiment, the engine is kept stopped during the operation to disengage and engage the clutch 54 that is intended for failure detection for the automatic clutch system 77. Therefore, such operation as to be intended for failure detection can be implemented more safely.

According to this embodiment, in the case that the engine starter is turned ON during the operation to disengage and engage the clutch 54 that is intended for failure detection for the automatic clutch system 77, the engine is kept stopped while this operation is performed, and then the engine is started-up after the completion of the operation. Thus, even when the engine starter is turned ON during the operation to disengage and engaged the clutch 54 that is intended for failure detection, such turning ON of the engine starter is not cancelled. Therefore, although there is a slight time lag between when the engine starter is turned ON and when the engine is started-up, a series of operations from turning the main switch 96 ON to starting-up the engine are performed smoothly. This reduces the possibility of causing discomfort for the user.

As described in the aforementioned embodiment, after the main switch 96 is turned ON, the operation to disengage and engage the clutch 54 is performed regardless of a manual operation by the rider. Also, during this operation, failure detection for the automatic clutch system 77 is implemented. However, in the embodiment, failure detection for the automatic clutch system 77 may also be implemented during, an operation to disengage and engage the clutch 54 that is intended for normal shift changes. More specifically, the failure detection may be performed during the operation to disengage and engage the clutch 54 that is intended for shift changes, in response to the operation of the shift up switch 43a or the shift down switch 43b (See FIG. 2).

In addition, as described in the aforementioned embodiment, a totalized value of current supplied to the clutch actuator 63 is calculated for a specific period of time while the clutch 54 is in the process of engaging in the operation to disengage and engage the clutch 54. However, the embodiment is not limited to that, the totalized value may be calculated while the clutch 54 is in the process of disengaging.

In addition, as described in the aforementioned embodiment, a totalized current value is calculated over a whole period of the engagement stroke of the clutch 54. However, the totalized value is not necessarily calculated over the whole period, but may be calculated over a part of the period of the engagement stroke of the clutch 54.

In order to reduce the time necessary for failure detection, the disengagement stroke of the clutch 54 may be shortened compared to the disengagement stroke for normal gear changes. More specifically, in one case of the operation to disengage and engage the clutch 54 for gear changes, the clutch actuator 63 may be controlled such that the friction plates 54c and the clutch plates 54d are spaced from each other by a specific distance, while in the other case of the operation to disengage and engage the clutch 54 for failure detection, the clutch actuator 63 may be controlled such that the friction plates 54c and the clutch plates 54d are spaced from each other by a distance shorter than specified above. Thereby, the time duration needed for disengaging and engaging the clutch 54 for failure detection can be shortened, resulting the prompt failure detection.

As has been described previously, the present teaching is useful for a clutch failure detector for detecting a failure of an automatic clutch system.

The description above discloses (amongst others) an embodiment of a clutch failure detector for detecting a failure of an automatic clutch system having a friction clutch and an electric actuator for directly or indirectly disengaging and engaging the friction clutch, the clutch failure detector including: a current value detector for detecting a value of current supplied to the actuator, and a determination device for determining whether or not the automatic clutch system has a failure based on a result of the detection by the current value detector.

With the clutch failure detector, failure detection for the automatic clutch system is performed based on the value of current supplied to drive the electric actuator for disengaging and engaging the friction clutch. For instance, in a hydraulic automatic clutch system, in the event that hydraulic oil leakage occurs in a driving mechanism between the actuator and the friction clutch, the leakage is detected as a change in current value for the actuator, based on which a failure of the automatic clutch system is detected. Using the clutch failure detector thus configured results in no additional step of installing a sensor, thereby simplifying its assembly process. In addition, no space is needed for installing the sensor. Further, no problem arises with respect to durability of the installation area of the sensor.

According to the present embodiment, the clutch failure detector for detecting a failure of the automatic clutch system can simplify its assembly process and eliminate the necessity of securing a space for installing the sensor. In addition, according to the present embodiment, as no additional sensor need be installed, no problem arises with respect to durability of the installation area.

The description above further discloses, as a first preferred aspect, a clutch failure detector for detecting a failure of an automatic clutch system having a friction clutch and an electric actuator for directly or indirectly disengaging and engaging the friction clutch, comprising: a current value detector for detecting a value of current supplied to the actuator; and a determination device for determining whether or not the automatic clutch system has a failure based on a result of the detection by the current value detector.

Further, according to a second preferred embodiment, the clutch failure detector further comprises a totalized value calculator for calculating a totalized current value detected by the current value detector, wherein the determination device compares the totalized value for a specific period of time during an operation to disengage and engage the friction clutch with a preset threshold in order to perform failure detection for the automatic clutch system.

Further, according to a third preferred embodiment, the determination device compares the totalized value for a specific period of time while the friction clutch is in the process of engaging, with a preset threshold.

Further, according to a fourth preferred embodiment, there is disclosed an automatic clutch system comprising: a friction clutch; an electric actuator for directly or indirectly disengaging and engaging the friction clutch; a drive control unit for drive control of the actuator; and a clutch failure detector according to one of the first to third aspects.

Further, according to a fifth preferred aspect, the friction clutch is a wet multiple plate clutch.

Further, according to a sixth preferred aspect, the actuator is a motor.

Further, according to a seventh preferred aspect, there is disclosed a straddle-type vehicle comprising the automatic clutch system according to one of the fourth to sixth aspects.

Further, according to an eighth preferred aspect, the straddle-type vehicle further comprises a power source system for supplying power; a main switch for turning ON/OFF power supply from the power source system; and an engine; wherein the drive control unit drives the actuator in response to turning ON the main switch, and the clutch failure detector performs failure determination based on the current value for the actuator.

Further, according to an ninth preferred aspect, there is disclosed a straddle-type vehicle further comprising: a power source system for supplying power; a main switch for turning ON/OFF power supply from the power source system; and an engine; wherein the drive control unit drives the actuator in response to turning ON the main switch to perform the operation to disengage and engage the friction clutch, and the clutch failure detector performs failure determination for the automatic clutch system while the friction clutch is in the process of engaging in the operation to disengage and engage the friction clutch.

Further, according to a tenth preferred aspect, there is disclosed a straddle-type vehicle further comprising: a power source system for supplying power; a main switch for turning ON/OFF power supply from the power source system; and an engine; wherein upon turning ON the main switch, the drive control unit drives the actuator prior to a start-up of the engine, and the clutch failure detector performs failure determination based on the current value for the actuator, which is obtained prior to the start-up of the engine.

Further, according to an eleventh preferred aspect, there is disclosed a straddle-type vehicle further comprising: a power source system for supplying power; a main switch for turning ON/OFF power supply from the power source system; and a gearbox, wherein when the gearbox is in neutral, the drive control unit drives the actuator upon turning ON the main switch to perform the operation to disengage and engage the friction clutch, and the clutch failure detector performs failure detection for the automatic clutch system while the friction clutch is in the process of engaging in the operation to disengage and engage the friction clutch.

Further, according to a twelfth preferred aspect, there is disclosed a straddle-type vehicle further comprising: a power source system for supplying power; a main switch for turning ON/OFF power supply from the power source system; and a gearbox, and a brake, wherein in case that the main switch is turned ON with the gearbox in a gear-in state, the drive control unit drives the actuator upon a brake-on operation to perform the operation to disengage and engage the friction clutch, and the clutch failure detector performs failure detection for the automatic clutch system while the friction clutch is in the process of engaging in the operation to disengage and engage the friction clutch.

Further, according to a thirteenth preferred aspect, there is disclosed a straddle-type vehicle further comprising an alarm for informing that the clutch failure detector has detected a failure of the automatic clutch system.

Further, according to a fourteenth preferred aspect, there is disclosed a straddle-type vehicle further comprising a gearbox, wherein the friction clutch has a first and a second friction member which contact with and separate from each other, and the drive control unit allows both the friction members to be spaced apart by a specific distance in the case of gear changes of the gearbox, while allowing both the friction members to be spaced apart by a distance shorter than the specific distance in the case of the failure determination.

### Further, according to a fifteenth preferred aspect, there is disclosed a straddle-type vehicle further comprising a holding device for holding the engine stop state while the operation to disengage and engage the friction clutch is performed by the drive control unit.

Further, according to a sixteenth preferred aspect, there is disclosed a straddle-type vehicle further comprising an engine starter that starts-up the engine automatically after the operation to disengage and engage the friction clutch is ended, in case that an operation related to a start-up of the engine is implemented while the operation to disengage and engage the friction clutch is performed by the drive control unit.

Further, according to a particularly preferred aspect, in order to provide a clutch failure detector for detecting a failure of an automatic clutch system simplifies an assembly process of a two-wheeled motor vehicle provided with the clutch failure detector, and eliminates the necessity of securing a space for installing a sensor, there is disclosed an embodiment, in which upon turning ON a main switch, an operation to disengage and engage a clutch is performed by a clutch actuator, and a totalized value of current supplied to a clutch actuator is calculated for a specific period of time while the clutch is in the process of engaging in the operation to disengage and engage the clutch, and wherein the totalized value is compared with a preset threshold, and if a difference between the totalized value and the threshold is equal to or greater than a given value, it is determined that an automatic clutch system has a failure, and wherein the value of current supplied to the clutch actuator during the operation to disengage and engage the clutch is fed-back to a main microcomputer.

## Claims

1. Method to detect failure of an automatic clutch system (77) of a vehicle, wherein a value of a current supplied to a clutch actuator (63) during an operation of engagement and disengagement of a clutch (54) is determined, and wherein a judgement of presence of a failure is made based on the such determined current value,
**characterized in that**
a totalized current value over a specific period of time is calculated, and this totalized current value is compared with a preset threshold in order to determine presence or absence of a failure.

2. Method according to claim 1 or 2, wherein the operation of engagement and disengagement of the clutch (54) is executed separately after detecting a start command for an engine (28) of the vehicle and prior starting the engine (28).

3. Clutch failure detector for detecting a failure of an automatic clutch system (77) having a clutch (54) and a clutch actuator (63) for directly or indirectly disengaging and engaging the clutch (54), comprising:
a current value detector (91) for detecting a value of current supplied to the clutch actuator (63); and
a determination device for determining presence or absence of a failure of the automatic clutch system (77) based on a result of the detection by the current value detector (91),
**characterized in that**
a totalized value calculator (92) which calculates a totalized current value detected by the current value detector (91) is provided, and the determination device compares the totalized value for a specific period of time during an operation to disengage and engage the clutch (54) with a preset threshold in order to perform failure detection for the automatic clutch system (77).

4. Clutch failure detector according to claim 3, wherein the determination device compares the totalized value for a specific period of time while the clutch (54) is in the process of engaging, with a preset threshold.

5. Automatic clutch system comprising:
a clutch (54);
a clutch actuator (63) for directly or indirectly disengaging and engaging the clutch (54);
a drive control unit for drive control of the clutch actuator (63); and
a clutch failure detector according to claim 3 or 4.

6. Automatic clutch system according to claim 5, wherein the clutch (54) is a friction clutch, in particular a wet multiple plate clutch.

7. Automatic clutch system according to claim 5 or 6, wherein the clutch actuator (63) is a motor.

8. Motorcycle or four-wheeled buggy vehicle having a body frame (11) and a seat (16) on which a rider can be seated straddling the body frame (11) when being seated, comprising the automatic clutch system (77) according to one of the claims 5 to 7.

9. Vehicle according to claim 8, further comprising:
a power source system (97, 98) for supplying power;
a main switch (96) for turning ON/OFF power supply from the power source system (97, 98); and
an engine (28).

10. Vehicle according to claim 9, wherein the drive control unit drives the clutch actuator (63) in response to turning ON the main switch (96), and the clutch failure detector performs failure determination based on the current value for the clutch actuator (63).

11. Vehicle according to claim 9 or 10, wherein the drive control unit drives the clutch actuator (63) in response to turning ON the main switch (96) to perform the operation to disengage and engage the clutch (54), and the clutch failure detector performs failure determination for the automatic clutch system (77) while the clutch (54) is in the process of engaging in the operation to disengage and engage the clutch (54).

12. Vehicle according to one of the claims 9 to 11, wherein upon turning ON the main switch (96), the drive control unit drives the clutch actuator (63) prior to a start-up of the engine (28), and the clutch failure detector performs failure determination based on the current value for the clutch actuator (63), which is obtained prior to the start-up of the engine (28).

13. Vehicle according to one of the claims 9 to 12, further comprising a gearbox (80), wherein when the gearbox (80) is in neutral, the drive control unit drives the clutch actuator (63) upon turning ON the main switch (96) to perform the operation to disengage and engage the clutch (54), and the clutch failure detector performs failure detection for the automatic clutch system (77) while the clutch (54) is in the process of engaging in the operation to disengage and engage the clutch (54).

14. \/ehicle according to one of the claims 9 to 13, further comprising a brake, wherein in case that the main switch (96) is turned ON with the gearbox (80) in a gear-in state, the drive control unit drives the clutch actuator (63) upon a brake-on operation to perform the operation to disengage and engage the clutch (54), and the clutch failure detector performs failure detection for the automatic clutch system (77) while the clutch (54) is in the process of engaging in the operation to disengage and engage the clutch (54).

15. Vehicle according to one of the claims 8 to 14, further comprising an alarm (45) for informing that the clutch failure detector has detected a failure of the automatic clutch system (77).

16. Vehicle according to one of the claims 8 to 15, further comprising a gearbox (80), wherein the clutch (54) has a first and a second friction member (54c, 54d) which contact with and separate from each other, and the drive control unit allows both the friction members (54c, 54d) to be spaced apart by a specific distance in the case of gear changes of the gearbox (80), while allowing both the friction members (54c, 54d) to be spaced apart by a distance shorter than the specific distance in the case of the failure determination.

17. Vehicle according to one of the claims 9 to 16, further comprising a holding device for holding the engine (28) in a stop state while the operation to disengage and engage the clutch (54) is performed by the drive control unit.

18. Vehicle according to claim 17, further comprising an engine starter that starts-up the engine (28) automatically after the operation to disengage and engage the clutch (54) is ended, in case that an operation related to a start-up of the engine (28) is implemented while the operation to disengage and engage the clutch (54) is performed by the drive control unit.

## Patentansprüche

1. Verfahren zum Erfassen eines Fehlers eines automatischen Kupplungssystems (77) eines Fahrzeuges, wobei ein Wert eines Stromes, zugeführt zu einem Kupplungsbetätiger (63) während eines Vorgangs des In- Eingriff- Bringens oder des Außer- Eingriff- Bringens einer Kupplung (54) festgestellt wird, und wobei eine Feststellung der Anwesenheit eines Fehlers auf der Grundlage solch eines festgestellten Stromwertes vorgenommen wird,
**dadurch gekennzeichnet, dass**
ein zusammengefasster Stromwert über einen speziellen Zeitraum berechnet wird und dieser zusammengefasste Wert mit einem vorgegebenen Grenzwert verglichen wird, um die Anwesenheit oder Abwesenheit eines Fehlers festzustellen.

2. Verfahren nach Anspruch 1 oder 2, wobei der Vorgang des In- Eingriff- Bringens oder des Außer- Eingriff- Bringens der Kupplung (54) separat nach dem Erfassen eines Startbefehls für einen Motor (28) des Fahrzeuges und vor dem Starten des Motors (28) ausgeführt wird.

3. Kupplungsfehler- Erfassungseinrichtung zum Erfassen eines Fehlers eines automatischen Kupplungssystems (77) mit einer Kupplung (54) und einem Kupplungsbetätiger (63) zum direkten oder indirekten Außer- Eingriff- Bringen oder In- Eingriff- Bringen der Kupplung (54), aufweisend:
einen Stromwerterfasser (91) zum Erfassen eines Stromwertes, zugeführt zu dem Kupplungsbetätiger (63); und
eine Feststellungsvorrichtung zum Feststellen der Anwesenheit oder Abwesenheit eines Fehlers des automatischen Kupplungssystems (77) auf der Grundlage der Erfassung durch den Stromwerterfasser (91),
**gekennzeichnet dadurch, dass**
ein zusammengefasster Wert- Berechner (92), um einen zusammengefassten Stromwert, erfasst durch den Stromwerterfasser (91), zu berechnen, vorgesehen ist und die Feststellungsvorrichtung den zusammengefassten Wert für einen spezifischen Zeitraum während eines Vorgangs des In- Eingriff- Bringens oder des Außer- Eingriff- Bringens der Kupplung (54) mit einem vorgegebenen Grenzwert vergleicht, um eine Fehlererfassung für das automatische Kupplungssystem (77) auszuführen.

4. Kupplungsfehler- Erfassungseinrichtung nach Anspruch 3, wobei die Feststellungsvorrichtung den zusammengefassten Wert für einen spezifischen Zeitraum mit einem vorgegebenen Grenzwert vergleicht, während die Kupplung (54) in dem Vorgang des Eingreifens ist.

5. Automatisches Kupplungssystem, aufweisend:
eine Kupplung (54);
einen Kupplungsbetätiger (63) zum direkten oder indirekten Außer- Eingriff- Bringen oder In- Eingriff- Bringen der Kupplung (54);
eine Antriebssteuereinheit zur Antriebssteuerung des Kupplungsbetätigers (63); und
eine Kupplungsfehler- Erfassungseinrichtung nach Anspruch 3 oder 4.

6. Automatisches Kupplungssystem nach Anspruch 5, wobei die Kupplung (54) eine Reibungskupplung, insbesondere eine Nass- Mehrscheibenkupplung ist.

7. Automatisches Kupplungssystem nach Anspruch 5 oder 6, wobei der Kupplungsbetätiger (63) ein Motor ist.

8. Motorrad oder Vierrad- Buggy- Fahrzeug mit einem Karosserierahmen (11) und einem Sitz (16), auf den ein Fahrer gesetzt werden kann, der mit den Beinen den Karosserierahmen (11) überspreizt, wenn er sitzt, aufweisend das automatische Kupplungssystem (77) nach einem der Ansprüche 5 bis 7.

9. Fahrzeug nach Anspruch 8, außerdem aufweisend:
ein Antriebsquellensystem (97, 98) zum Zuführen von Energie;
einen Hauptschalter (96) zum Ein / AUS- Schalten der Energiezuführung von dem Antriebsquellensystem (97, 98); und einer Brennkraftmaschine (28).

10. Fahrzeug nach Anspruch 9, wobei die Antriebssteuereinheit den Kupplungsbetätiger (63) in Abhängigkeit vom EIN- Schalten des Hauptschalters (96) antreibt und die Kupplungsfehler- Erfassungseinrichtung die Fehlerfeststellung auf der Grundlage des Stromwertes für den Kupplungsbetätiger (63) ausführt.

11. Fahrzeug nach Anspruch 9 oder 10, wobei die Antriebssteuereinheit den Kupplungsbetätiger (63) in Abhängigkeit vom EIN- Schalten des Hauptschalters (96) antreibt, um den Vorgang auszuführen, die Kupplung (54) außer Eingriff oder in Eingriff zu bringen, und die Kupplungsfehler- Erfassungseinrichtung die Fehlerfeststellung für das automatische Kupplungssystem (77) ausführt, während die Kupplung (54) im Vorgang des Eingreifens in dem Prozess des Außer- Eingriff-Bringens oder In- Eingriff- Bringens der Kupplung (54) ist.

12. Fahrzeug nach einem der Ansprüche 9 bis 11, wobei bei dem EIN- Schalten des Hauptschalters (96) die Antriebssteuereinheit den Kupplungsbetätiger (63) vor einem Start der Brennkraftmaschine (28) antreibt und die Kupplungsfehler- Erfassungseinrichtung die Fehlerfeststellung auf der Grundlage des Stromwertes für den Kupplungsbetätiger (63) ausführt, der vor dem Start der Brennkraftmaschine (28) erhalten wird.

13. Fahrzeug nach einem der Ansprüche 9 bis 12, außerdem aufweisend ein Schaltgetriebe (80), wobei wenn das Schaltgetriebe (80) in der neutralen Stellung ist, die Antriebssteuereinheit den Kupplungsbetätiger (63) in der EIN- Schaltstellung des Hauptschalters (96) antreibt, um den Vorgang auszuführen, die Kupplung (54) in Eingriff oder außer Eingriff zu bringen, und die Kupplungsfehler- Erfassungseinrichtung die Fehlererfassung für ein automatisches Kupplungssystem (77) ausführt, während die Kupplung (54) in dem Prozess des Eingreifens in dem Vorgang des Außer- Eingriff- Bringens oder In- Eingriff- Bringens der Kupplung (54) ist.

14. Fahrzeug nach einem der Ansprüche 9 bis 13, außerdem aufweisend eine Bremse, wobei im Fall, dass der Hauptschalter (96) EIN- geschaltet wird, wobei das Schaltgetriebe (80) in einem eingerückten Zustand ist, die Antriebssteuereinheit den Kupplungsbetätiger (63) in einem Bremsvorgang antreibt, um den Vorgang auszuführen, die Kupplung (54) außer Eingriff oder in Eingriff zu bringen, und die Kupplungsfehler- Erfassungseinrichtung die Fehlererfassung für das automatische Kupplungssystem (77) ausführt, während die Kupplung (54) in dem Prozess des In- Eingriff- Bringens in den Vorgang Außer- Eingriff- Bringen oder In- Eingriffbringen der Kupplung (54) ist.

15. Fahrzeug nach einem der Ansprüche 8 bis 14, außerdem aufweisend einen Alarm (45) zum Informieren, dass die Kupplungsfehler- Erfassungseinrichtung einen Fehler des automatischen Kupplungssystems (77) erfasst hat.

16. Fahrzeug nach einem der Ansprüche 8 bis 15, außerdem aufweisend ein Schaltgetriebe (80), wobei die Kupplung (54) ein erstes und ein zweites Reibungsteil (54c, 54d) hat, die einander berühren oder voneinander getrennt werden, und die Antriebssteuereinheit beiden Reibungsteilen (54c, 54d) gestattet in dem Fall der Gangwechsel des Schaltgetriebes (80), um einen bestimmten Abstand beabstandet zu sein, während beiden Reibungsteilen (54c, 54d) gestattet wird, um einen Abstand kürzer beabstandet zu sein, als der spezifische Abstand in dem Fall der Fehlerfeststellung ist.

17. Fahrzeug nach einem der Ansprüche 9 bis 16, außerdem aufweisend eine Haltevorrichtung zum Halten der Brennkraftmaschine (28) in einem Stoppzustand, während der Vorgang, die Kupplung (54) außer Eingriff zu bringen oder in Eingriff zu bringen durch die Antriebssteuereinheit ausgeführt wird.

18. Fahrzeug nach Anspruch 17, außerdem aufweisend einen Brennkraftmaschinen-Starter, der die Brennkraftmaschine (28) automatisch startet, nachdem der Vorgang, die Kupplung (54) in Eingriff zu bringen oder außer Eingriff zu bringen, beendet ist, für den Fall, dass ein Vorgang, bezogen auf einen Start der Brennkraftmaschine (28) implementiert wird, während der Vorgang, die Kupplung (54) in Eingriff zu bringen oder außer Eingriff zu bringen durch die Antriebssteuereinheit ausgeführt wird.

## Revendications

1. Procédé pour détecter une défaillance d'un système d'embrayage automatique (77) d'un véhicule, dans lequel une valeur d'un courant appliqué à un actionneur d'embrayage (63) pendant une manoeuvre d'engagement et de désengagement d'un embrayage (54) est déterminée, et dans lequel un jugement de présence d'une défaillance est porté sur la base de cette valeur de courant déterminée,
**caractérisé en ce que**
une valeur de courant totalisée sur une période de temps spécifique est calculée, et cette valeur de courant totalisée est comparée à un seuil prédéterminé afin de déterminer la présence ou l'absence d'une défaillance.

2. Procédé selon la revendication 1 ou 2, dans lequel la manoeuvre d'engagement et de désengagement de l'embrayage (54) est exécutée séparément après la détection d'une commande de démarrage pour un moteur (28) du véhicule et avant le démarrage du moteur (28).

3. Détecteur de défaillance d'embrayage pour détecter une défaillance d'un système d'embrayage automatique (77) comportant un embrayage (54) et un actionneur d'embrayage (63) pour désengager et engager directement ou indirectement l'embrayage (54), comprenant :
un détecteur de valeur de courant (91) pour détecter une valeur d'un courant appliqué à l'actionneur d'embrayage (63) ; et
un dispositif de détermination pour déterminer la présence ou l'absence d'une défaillance du système d'embrayage automatique (77) sur la base d'un résultat de la détection effectuée par le détecteur de valeur de courant (91),
**caractérisé en ce que**
un calculateur de valeur totalisée (92) pour calculer une valeur de courant totalisée détectée par le détecteur de valeur de courant (91) est prévu, et le dispositif de détermination compare la valeur totalisée pendant une période de temps spécifique pendant une manoeuvre pour désengager et engager l'embrayage (54) à un seuil prédéterminé afin d'effectuer une détection de défaillance pour le système d'embrayage automatique (77) .

4. Détecteur de défaillance d'embrayage selon la revendication 3, dans lequel le dispositif de détermination compare la valeur totalisée pendant une période de temps spécifique, alors que l'embrayage (54) est en cours d'engagement, à un seuil prédéterminé.

5. Système d'embrayage automatique comprenant :
un embrayage (54) ;
un actionneur d'embrayage (63) pour désengager et engager directement ou indirectement l'embrayage (54) ;
une unité de commande d'entraînement pour la commande d'entraînement de l'actionneur d'embrayage (63) ; et
un détecteur de défaillance d'embrayage selon la revendication 3 ou 4.

6. Système d'embrayage automatique selon la revendication 5, dans lequel l'embrayage (54) est un embrayage à friction, en particulier un embrayage à disques multiples à huile.

7. Système d'embrayage automatique selon la revendication 5 ou 6, dans lequel l'actionneur d'embrayage (63) est un moteur.

8. Motocycle ou véhicule buggy à quatre roues comportant un cadre (11) et un siège (16) sur lequel un pilote peut être assis à califourchon sur le cadre (11) lorsqu'il est assis, comprenant le système d'embrayage automatique (77) selon l'une des revendications 5 à 7.

9. Véhicule selon la revendication 8, comprenant en outre :
un système de source d'énergie (97, 98) pour délivrer une puissance ;
un commutateur principal (96) pour activer/désactiver l'alimentation en puissance à partir du système de source d'énergie (97, 98) ; et
un moteur (28).

10. Véhicule selon la revendication 9, dans lequel l'unité de commande d'entraînement commande l'actionneur d'embrayage (63) en réponse à la fermeture du commutateur principal (96), et le détecteur de défaillance d'embrayage effectue une détermination de défaillance sur la base de la valeur de courant pour l'actionneur d'embrayage (63).

11. Véhicule selon la revendication 9 ou 10, dans lequel l'unité de commande d'entraînement commande l'actionneur d'embrayage (63) en réponse à la fermeture du commutateur principal (96) pour effectuer la manoeuvre pour désengager et engager l'embrayage (54), et le détecteur de défaillance d'embrayage effectue une détermination de défaillance pour le système d'embrayage automatique (77) alors que l'embrayage (54) est en cours d'engagement dans la manoeuvre pour désengager et engager l'embrayage (54).

12. Véhicule selon l'une des revendications 9 à 11, dans lequel, lors de la fermeture du commutateur principal (96), l'unité de commande d'entraînement commande l'actionneur d'embrayage (63) avant un démarrage du moteur (28), et le détecteur de défaillance d'embrayage effectue une détermination de défaillance sur la base de la valeur de courant pour l'actionneur d'embrayage (63), qui est obtenue avant le démarrage du moteur (28).

13. Véhicule selon l'une des revendications 9 à 12, comprenant en outre une boîte de vitesse (80), dans lequel, lorsque la boîte de vitesse (80) est dans l'état neutre, l'unité de commande d'entraînement commande l'actionneur d'embrayage (63) lors de la fermeture du commutateur principal (96) pour effectuer la manoeuvre pour désengager et engager l'embrayage (54), et le détecteur de défaillance d'embrayage effectue une détection de défaillance pour le système d'embrayage automatique (77) alors que l'embrayage (54) est en cours d'engagement dans la manoeuvre pour désengager et engager l'embrayage (54).

14. Véhicule selon l'une des revendications 9 à 13, comprenant en outre un frein, dans lequel, dans le cas où le commutateur principal (96) est fermé alors que la boîte de vitesse (80) est dans un état d'engrènement, l'unité de commande d'entraînement commande l'actionneur d'embrayage (63) lors d'une manoeuvre d'activation du frein pour effectuer la manoeuvre pour désengager et engager l'embrayage (54), et le détecteur de défaillance d'embrayage effectue une détection de défaillance pour le système d'embrayage automatique (77) alors que l'embrayage (54) est en cours d'engagement dans la manoeuvre pour désengager et engager l'embrayage (54).

15. Véhicule selon l'une des revendications 8 à 14, comprenant en outre une alarme (45) pour informer que le détecteur de défaillance d'embrayage a détecté une défaillance du système d'embrayage automatique (77).

16. Véhicule selon l'une des revendications 8 à 15, comprenant en outre une boite de vitesse (80), dans lequel l'embrayage (54) comporte des premier et deuxième éléments de friction (54c, 54d) qui viennent en contact l'un avec l'autre et se séparent l'un de l'autre, et l'unité de commande d'entraînement permet la séparation des deux éléments de friction (54c, 54d) d'une distance spécifique dans le cas de changements de rapport de la boîte de vitesse (80), tout en permettant la séparation des deux éléments de friction (54c, 54d) d'une distance plus petite que la distance spécifique dans le cas de la détermination de défaillance.

17. Véhicule selon l'une des revendications 9 à 16, comprenant en outre un dispositif de maintien pour maintenir le moteur (28) dans un état d'arrêt alors que la manoeuvre pour désengager et engager l'embrayage (54) est effectuée par l'unité de commande d'entraînement.

18. Véhicule selon la revendication 17, comprenant en outre un démarreur de moteur qui démarre le moteur (28) automatiquement à la fin de la manoeuvre pour désengager et engager l'embrayage (54), dans le cas où une manoeuvre associée à un démarrage du moteur (28) est effectuée alors que la manoeuvre pour désengager et engager l'embrayage (54) est effectuée par l'unité de commande d'entraînement.
